# EUROPEAN PATENT APPLICATION

(11) **EP 3 267 329 A1**
(43) Date of publication of application: **10.01.2018**
(21) Application number: 16178776.7
(22) Date of filing: 11.07.2016
(51) Int. Cl.: G06F 17/30

(54) **DATA PROCESSING METHOD HAVING STRUCTURE OF CACHE INDEX SPECIFIED TO TRANSACTION IN MOBILE ENVIRONMENT DBMS**

(30) Priority: 05.07.2016 KR 20160084665
(71) Applicant: Realtimetech Co., Ltd., Daejeon 34036 (KR)
(72) Inventor: KIM, Shinyoo, Daejeon 34008 (KR); KIM, Jaekwang, Daejeon 34185 (KR); HAN, Hyeok, Daejeon 34082 (KR); JIN, Seongil, Daejeon 34124 (KR)
(74) Representative: Ter Meer Steinmeister & Partner

(57) **Abstract**

The present invention relates to a data processing method in DBMS, and more particularly, to the data processing method having an index cache structure specified to a transaction in a mobile DBMS environment, capable of quickly and efficiently performing data update calculation by reducing the number of accessing data stored on a disk by a buffer manager when inserting/deleting data in response to a user inquiry request.

## Description

### BACKGROUND OF THE INVENTION

### Field of the Invention

The present invention relates to a data processing method in DBMS, and more particularly, to the data processing method having an index cache structure specified to a transaction in a mobile DBMS environment, capable of quickly and efficiently performing data update calculation by reducing the number of accessing data stored on a disk by a buffer manager when inserting/deleting data in response to a user inquiry request.

### Description of the Related Art

A database management system (DBMS) is a set of a software tool for allowing a large number of users to access data in the database. More specifically, the DBMS is implemented in a database server, so that it systematically handles the needs of a large number of users or programs and properly responds to it so as to allow the use of the data.

In the meantime, when a certain query is input from an external source, the DBMS performs functions, such as selecting, inserting, updating, and deleting data with respect to the database, based on the input certain query. Here, a query is a description about a demand regarding data stored in the table of the database, i.e., about manipulation to be performed on the data, and is expressed by using a language, such as structured query language (SQL).

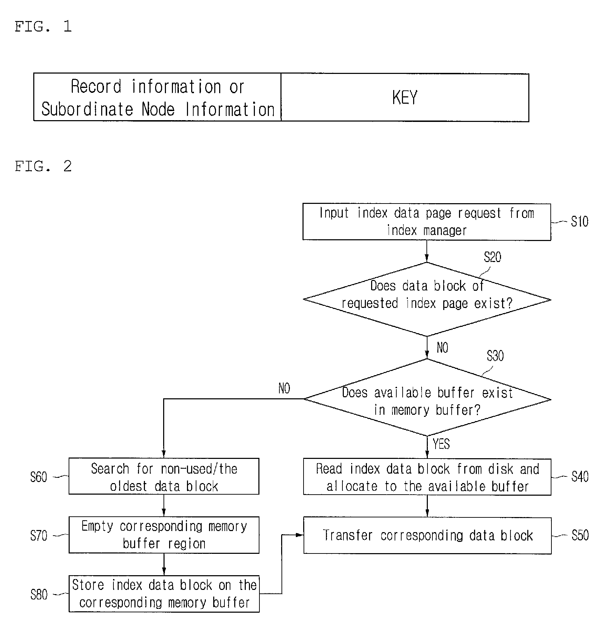

Due to the massive amount of data, the DBMS generally includes an index. Here, the index means a data structure that increases a search speed on the table in database fields. In other words, in order to form the index for data search in the database system, it should be provided with a key for data search and a record information (physical or logic record ID) for access the record, in which the searched key is stored. That is, as shown in FIG. 1, the index has a data structure including a record information or a child node information and a key value for search. This unit data structure is called as a node entry or a node item.

In the meantime, a database serves to save a data to a disk. In the database, a buffer management technique for reading the data stored in the disk with blocks of a certain size, putting it on the memory as necessary, and performing a process for user's request is being applied.

The buffer manager handles the data blocks read from the disk in a memory buffer and then, deletes the oldest data blocks or the disused data blocks from the memory buffer where it is full of the data blocks. Then, The buffer manager serves to read the data block on a new request of the user from the disk and put it on the memory buffer.

At this time, the oldest data blocks or the disused data blocks refer to all data blocks, which are not currently referenced. The data block registered one in the memory buffer by buffer manager is referenced by the user's request or replaced with a different data block.

Actually, in order to access the disk, in which the data is stored, a disk input and output (I/O) having the longest time required is generated.

By the way, after the data block is registered in the memory buffer and is changed and handled according to the user's request, when the corresponding data block is rewritten in the disk, the file I/O frequency rate can be increased.

In other words, if a reference on the data block registered and used in the memory buffer is not existed, the changed data block is written in the disk and is replaced with another data block. At this time, if a request for the corresponding data block is again generated, the corresponding data block should be rewritten to be registered in the memory buffer.

Where it processes large amounts of data with a single transaction, it can frequently occur the above situation. Accordingly, when it handles a large volume of the transactions, the file I/O frequency is increased owing to the disk access, which is frequently occurred, so that the performance thereof becomes slow.

FIG. 2 is a flowchart of an index during data insertion/deletion of a database management system according to the conventional art.

Referring to FIG. 2, firstly, if a query handler asks an index manager to insert or delete the data, the index manager finds out the index on the corresponding data to be selected.

Then, the index manager configures an index key of the selected index and asks the index manager for the key insertion/deletion for index. Also, the index manager asks the buffer manager for the page on the corresponding index data to receive it.

The buffer manager determines whether the data block corresponding to the received index page is existed in the memory buffer according to the request (S10) for the index data page of the index manager (S20). If the requested and received data block is existed therein, it transmits the corresponding data block thereto.

At this time, if the data block corresponding to the received index page is not existed therein, it determines whether a free buffer is exited in the memory buffer or not (S30). If free buffer is existed therein, it reads the index data block from the disk to be allotted to the free buffer (S40) and then, transmits the corresponding data block thereto (S50).

If the free buffer is not exited in the memory buffer, it searches the oldest data block or the disused data block within the memory buffer (S60). If the changed history is existed in the corresponding data block, it writes to the file. Subsequently, it empties the corresponding memory buffer area and creates an empty buffer area (S70). Then, the index data block read from the file is stored in the empty memory buffer and it transmits the corresponding data block thereto (S80).

Then, the index manager inserts or deletes the index key into or from the received index data page and transmits the result to the query handler.

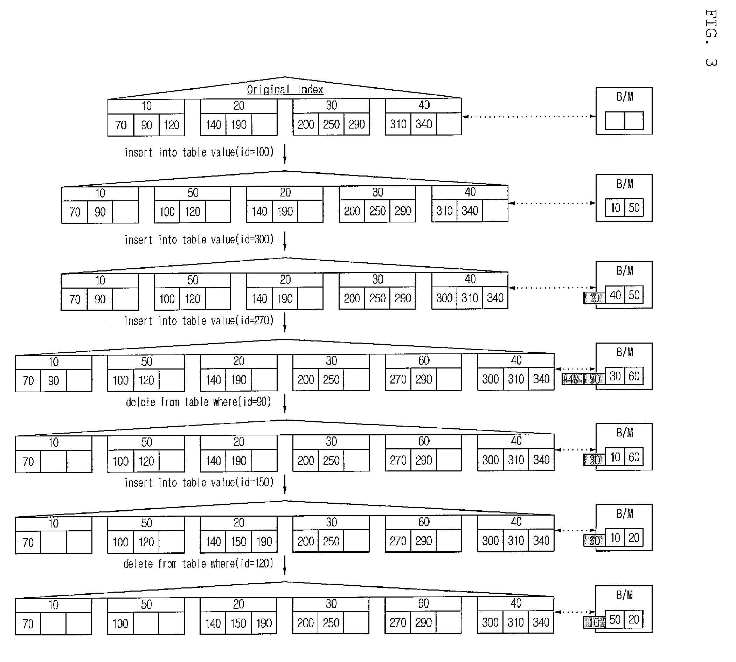

FIG. 3 is an example view illustrating an index insertion/deletion and a buffer management method according to the query request of the user of the general database management system. It will be explained that the number of the pages of managing by means of the buffer manager for DB index processing is two.

Here, the user query requests are as follows.

"insert into table value(id=100)";
"insert into table value(id=300)";
"insert into table value(id=270)";
"delete from table where(id=90)";
"insert into table value(id=150)";
"delete from table where(id=120)";
Firstly, if the "insert into table value (id = 100)" is inputted, the buffer manager (B/M) reads a page "10" in which the page id = 100 is inputted. Here, since the empty area for saving the key is not exited in the page "10", it divides the page "10" and generates the page "10" and a new page "50", thereby putting them on the buffer.

Then, the id = 120 moves to the page "50" and stores in the empty area of the page "10".

Subsequently, if the "insert into table value (id = 300)" is inputted, the buffer manager (B/M) reads a page "40" in which the page id = 300 is inputted. Here, since the number of the page capable of managing by the buffer manager (B/M) is two, it writes the page "10" to the file.

And, it imports the page "40" into an empty buffer area, so that the id = 300 is inputted in the first area of the page "40" and the page "50" is maintained.

Next, if the "insert into table value (id = 270)" is inputted, the buffer manager (B/M) reads a page "30" in which the page id = 270 is inputted. Here, since the empty area is not exited in the page "30", it divides the page "300" and generates the page "30" and a new page "60", thereby putting them on the buffer. Here, since the number of the page capable of managing by the buffer manager (B/M) is two, it writes the pages "40" and "50" to the file before the pages "30" and "60" is imported.

Then, the id = 290 moves to the page "60" and the id = 270 is stored in the first area of the page "60".

Continuously, the "delete from table where (id=90)" is inputted, the buffer manager (B/M) reads a page "10" in which the id = 90 is located. At this time, because it requires an empty buffer, it files the page "30" having an older reference to the file and reads the page "10" to delete the id = 90.

Next, if the "insert into table value (id = 150)" is inputted, the buffer manager (B/M) reads a page "20" to write the id = 150. At this time, since it requires an empty buffer for putting the page "20" thereon, it files the page "60" having an old reference.

Then, if the "delete from table where (id = 120)" is inputted, the buffer manager (B/M) reads a page "50" in which the id = 120 is located. At this time, because it requires an empty buffer, it files the page "60" having an older reference to the file and deletes the id = 120 of the page "50".

According to the above examples, the page changes for writing to the file are generated eight times. In other words, eight changes of the pages including the page "10" for inserting the id = 300, the page "40" for inserting the id = 270, the page "50", the page "30" for deleting the id = 90, the page "60" for inserting the id =150, the page "10" for deleting the id = 120, and the pages "50" and "20" finally remained in the buffer manager are generated. Here, the page "10"and "50" are changed in duplicate.

In other words, when it performs the data update, if the number of the disk blocks updated in the index is larger than that of pages managed in the memory buffer, the old data block or the unused data block are deleted or are written to the file as described above.

Also, since it reads the disk blocks written to the file, the number of the access to the disk block is increased, thereby deteriorating the update performance.

### [Citation List]

[Patent Literature 1]
   Korean Patent Publication No. 2015-0044013 (March 12, 2015)" Method and System for Managing Database, and Tree Structure for Database"
[Patent Literature 2]
   Korean Patent No. 10-1295210 (August 12, 2013)" METHOD AND DEVICE FOR MANAGING DATABASE"

### SUMMARY OF THE INVENTION

The invention has been made in consideration of the circumstances described above, and a technical object of the present invention is to provide a data processing method having an index cache structure specified to a transaction in a mobile DBMS environment, capable of pre-sorting and storing an index key where a random disk access is occurred in an index on an index cache operated in a memory when updating index data, and reducing the number of accessing to write an existing data block on a disk to read data block from a memory buffer by migrating a cache key sorted in an index cache to an original index upon a transaction commit.

According to an aspect of the invention to achieve the object described above, there is provided a data processing method, having an index cache structure specified to a transaction in a mobile DBMS environment, including the steps of: recording only information on whether data is deleted/inserted on the an index cache without changing original index data while an inquiry process is progressed in response to a request to insert or delete data from an inquiry processor; and performing a change on data by changing the original index based on whether data recorded on the index cache upon a transaction commit is deleted.

Preferably, the data processing method further includes steps of generating and managing the index cache structure having an index cache key to sequentially manage the request to insert or delete data randomly inputted from the inquiry processor based on an index, wherein the index cache structure is configured of an information field for classifying whether data is inserted or deleted, a record ID field, and a key field.

Preferably, the information field for classifying whether the data is inserted or deleted is configured to be set as a del flag, and wherein the request is capable of determining as a request to insert data when the del flag is a null.

Preferably, the data processing method further includes steps of generating and managing an index cache node in response to a plurality of requests to insert/delete data inputted while the inquiry process is progressed, wherein the index cache node is configured of a plurality of index caches sorted as a sequence of a node page header and the record ID.

According to an aspect of the invention to achieve the object described above, there is provided a data processing method, having an index cache structure specified to a transaction in a mobile DBMS environment, including the steps of: requesting an index key insert/delete to an index cache by means of an index manager and an index without changing original index data, when a request to insert or delete data from an inquiry processor is generated; configuring an index cache key of requesting the data insert/delete by means of the index cache in response to the request for the index key insert/delete; configuring the configured cache key to an index cache node; classifying whether a request for a transaction commit is an insertion or a deletion of the index cache key and transferring the classification thereof to the index by means of the index cache, when the request for the transaction commit is generated from the inquiry processor; asking a buffer manager for an index data page by means of the index so as to receive it; and changing the received index data page in response to the request for the index key insert/delete received from the index and transferring a transaction result to the inquiry processor through the index manager.

Preferably, the index cache key is configured of an information field for classifying whether data is inserted or deleted, a record ID field, and a key field so as to sequentially manage the request to insert or delete data randomly inputted from the inquiry processor by means of the index cache.

Preferably, the information field for classifying whether the data is inserted or deleted is configured to be set as a del flag, and wherein the request is capable of determining as a request to insert data when the del flag is a null.

Preferably, the index cache node is configured of a plurality of index caches sorted as a sequence of a node page header and the record ID.

### BRIEF DESCRIPTION OF THE DRAWINGS

The above and other objects, features and advantages of the present invention will be more apparent from the following detailed description taken in conjunction with the accompanying drawings, in which:
FIG. 1 is a structural diagram of a data including a record information or a subordinate node information and a key value;
FIG. 2 is a flowchart of an index during data insertion/deletion of a database management system according to the conventional art;
FIG. 3 is an example view illustrating an index insertion/deletion and a buffer management method according to the query request of the user of the general database management system;
FIG. 4 is a data processing system structural diagram having an index cache structure specified to a transaction in a mobile DBMS environment in accordance with an embodiment of the present invention;
FIG. 5 is an index cache data structure in accordance with an embodiment of the present invention;
FIG. 6 is a node structure constructed in accordance with an embodiment of the present invention;
FIG. 7 and FIG. 8 are flow charts illustrating data processing methods having an index cache structure specified to a transaction in a mobile DBMS environment in accordance with an embodiment of the present invention;
FIG. 9 is a result of constructing the index cache, and a structure of the index cache node in accordance with an embodiment of the present invention; and
FIG. 10 is an exemplary diagram for explaining the index insert/delete and buffer management method in response to the user inquiry request of the database management system in accordance with the embodiment of the present invention.

### DETAILED DESCRIPTION OF THE PREFERRED EMBODIMENT

Hereinafter, a preferred embodiment of the invention will be described in detail with reference to the accompanying drawings. In the drawings, parts irrelevant to the description are omitted for a clear explanation of the present invention, and the same reference numeral is applied to the same parts throughout the specification. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

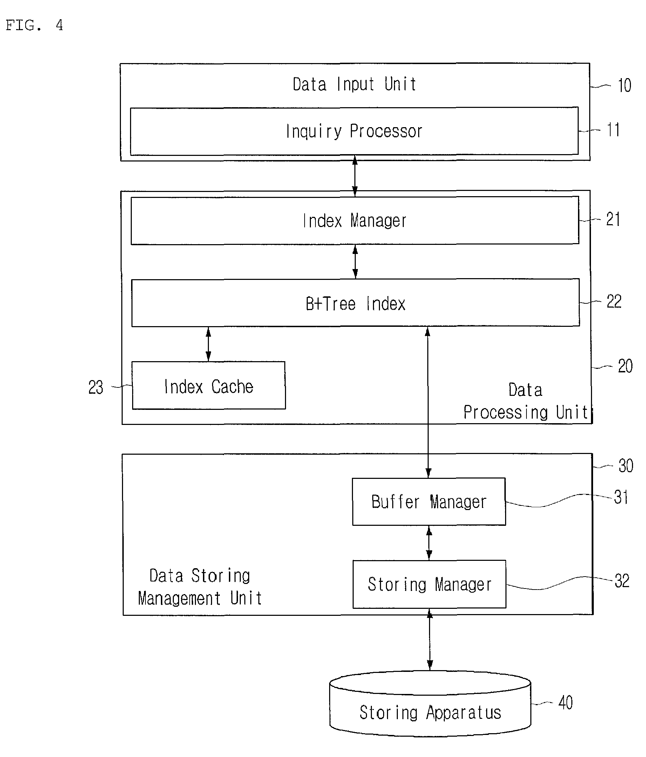

FIG. 4 is a data processing system structural diagram having an index cache structure specified to a transaction in a mobile DBMS environment in accordance with an embodiment of the present invention, comprising a data input unit 10, a data processing unit 20, a data storing management unit 30 and a storing apparatus 40.

The data input unit 10 performs a role of analyzing and optimizing data inputted from an exterior as an inquiry processor 11, and transferring a request to insert or delete data to the data processing unit 20. The inquiry processor 11 also performs a role of managing a transaction for a user request.

The data processing unit 20 comprises an index manager 21, a B+Tree index 22 and an index cache 23.

The index manager 21 selects an index in response to a request to insert/delete data from the inquiry processor 11, and configures an index key, and performs a request for inserting/deleting an index key to the B+Tree index 22. Further, the index manager 21 performs a role of transferring an index key insert/delete result and a transaction result to the inquiry processor 11.

The B+Tree index 22 performs a role of constructing an index data in response to a user request, and searching data from the constructed index.

Further, the B+Tree index 22 is configured of a terminal node portion storing a key value and a search node portion. There is an advantage of capable of searching data quickly as a key is sorted and stored in a terminal node due to the nature of the B+Tree index 22. The search node portion is storing route information to quickly access the terminal node where the key is stored.

The terminal node and the search node configured as the B+Tree index 22 use a page allocated from a buffer manager 31 to be described hereinafter.

The B+Tree index 22 stores data inputted after the transaction is initiated on the index cache 23 and stores data stored on the index cache 23 on the B+Tree when the transaction is committed.

The B+Tree index 22 inputs to the index cache 23 by configuring an index key inputted to insert data to the B+Tree as an index cache key, or inputs to the index cache 23 by configuring an index key inputted to delete data stored on the B+Tree as an index cache key.

The index cache 23 is configured of a terminal node portion storing the key value in the same way as the B+Tree and a search node portion, and inserts a flag of classifying an insert/delete key in response to a request to insert/delete data to be sorted into the terminal node.

The index cache 23 guarantees data process sequence by a user request as a key inputted later is inputted to the last of the same key position when the same key is inputted.

A search node and terminal node region configured as the index cache 23 is not allocated from the buffer manager as the B+Tree and configures a node such that a heap memory for which the index cache 23 manages itself is allocated.

The index cache 23 sequentially extracts index cache data sorted into the terminal node of the index cache when the transaction is committed and inputs the index cache data to the B+Tree. In this case, the index cache key is reconstructed back to the index key and determines whether data is inputted to or deleted from the B+Tree based on the reconstructed information.

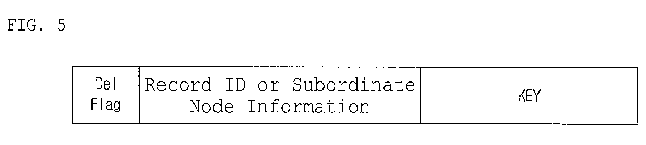

FIG. 5 is an index cache data structure in accordance with an embodiment of the present invention, the index cache data extends a node item configuring for a record or subordinate node information and a key for searching and has the node item for an index cache to which Del Flag information is added. In this case, the node item for the index cache data sets a Del Flag to a key to be deleted, and does not set the Del Flag to a key to be inserted.

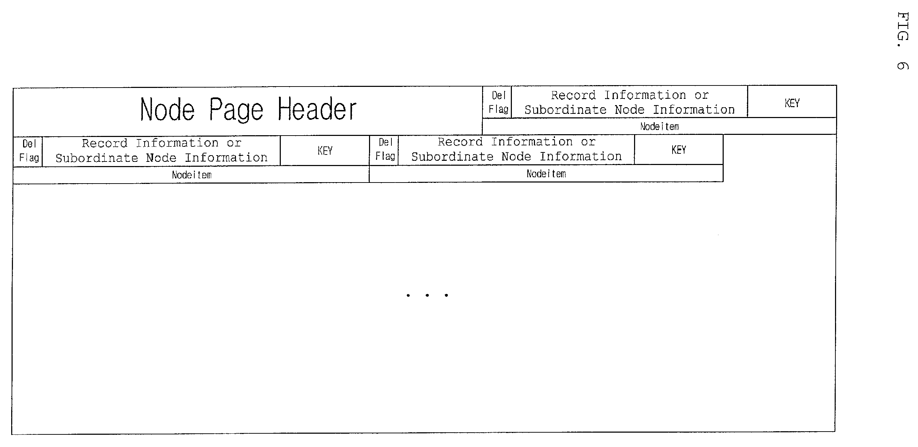

FIG. 6 is a node structure constructed in accordance with an embodiment of the present invention, and the node items for the index cache configured as a key and record information (or subordinate node information) and the Del Flag together with a node page header as shown in FIG. 6 are accumulated and constructed when the key is stored on the index cache 23.

Meanwhile, the data storing management unit 30 comprises a buffer manager 31 and a storing manager 32.

The buffer manager 31 to which a memory with a predetermined size is allocated classifies the allocated memory into a small region. In this case, a Heap memory which is the allocated memory with the predetermined size is called as a buffer, and a variety of regions which the buffer is classified into a plurality of regions with the same size is called as a page.

One page is the same as the size which is used as a node in the B+Tree and may be different from the size used as a node in the index cache 23.

The buffer manager 31 requests to read a data block on which a node of the B+Tree is stored, from the storing manager 32 in response to a request of the B+Tree, and transfers the data block to the B+Tree by loading the data block read by the storing manager 32 to a page managed by the buffer manager 31.

The buffer manager 31 stores a changed data block and loads an invoked data block to a page by performing to write in a file through the storing manager 32 if there is an item which data corresponding to the page is changed when the data block read by the storing manager 32 is loaded to the page.

The storing manager 32 performs a role of reading the data block from a file stored on the storing apparatus 40 or writing a changed data block when a request from the buffer manager 31 is received.

The storing apparatus 40 is referred to a physical disk on which the B+Tree index data is stored in a file, configured of a permanent storing medium such as a hard disk drive, a SSD (Solid State Drive) and so on, which requires a disk input/output (I/O).

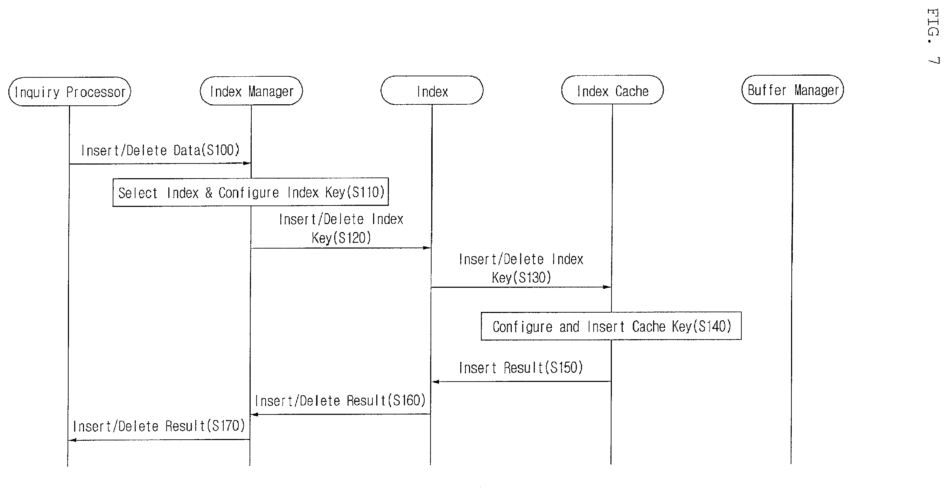

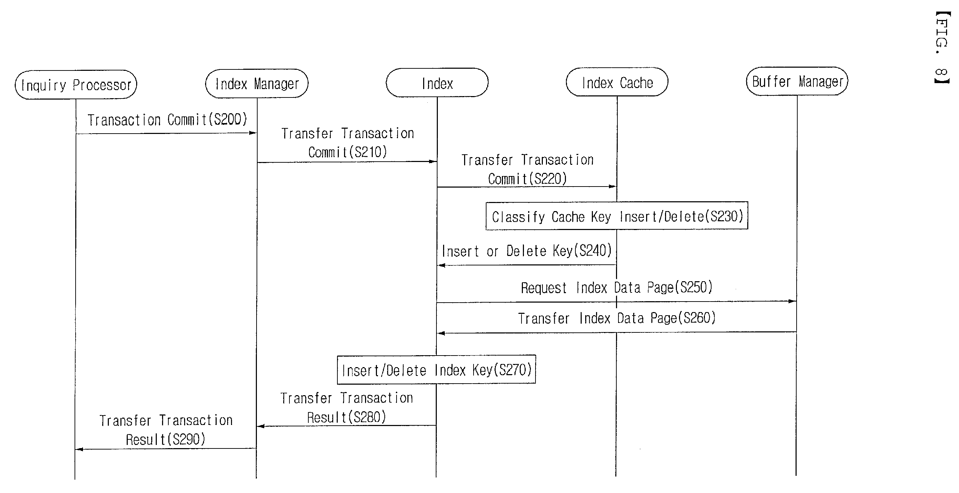

FIGS. 7 and 8 are a flow diagram showing a data processing method having an index cache structure specified to a transaction in a mobile DBMS environment in accordance with an embodiment of the present invention. FIG. 7 is a flow diagram of an index cache when inserting/deleting data, and FIG. 8 is a flow diagram of an index cache when a transaction is committed.

In the embodiment of the present invention, the index cache is generated when the transaction is initiated, and the index cache is deleted when the transaction is ended.

In specific, an index cache data processing method is explained as follows.

In general, a transaction manager and a log manager check a data page while processing all user inquiries when a transaction is initiated in a database, and writes a changed data page as a log when the page is changed.

When the data page already written as a log is also changed by a user request, the page written in the log is also changed. When the transaction commit is occurred, a finally written log page is reflected on an original database and then the transaction is ended.

Further, an operation occurred in an index by a user request has a data insert and a data delete. A node information change is occurred in accordance with the change of data when data is inputted to or data is deleted from the index, and thus a log page process fee which is hard to estimate in accordance with the change of information of a neighboring node or a parent node is added.

In the embodiment of the present invention, as shown in FIG. 7, when the transaction is initiated and the inquiry processor 11 requests to insert or delete data to the index manager 21 (S100), the index manager 21 searches and selects an index for a corresponding data.

Further, the index manager 21 configures the selected index as an index key (S110), requests an index key insert/delete in the index, and thus the index requests the index key insert/delete without changing the index key to the index cache 23 (S120).

Thus, the index 22 transfers a request of the index key insert/delete to the index cache (S130), the index cache 23 configures the index cache key, and inserts and stores the index cache key regardless of a transaction manager or a log manager (S140).

That is, an index key for inserting data to the index or an index key for deleting data from the index is transformed into the cache key, and as a Cache flag is set in the index cache key, information capable of classifying whether the index key is for inserting or the index key is for deleting is included.

And then, the index cache 23 transfers the result of the cache key insert to the index (S150), the index transfers only the result of the index key insert/delete to the index manager 21 without changing an original index (S160), and the index manager transfers the result of the index key insert/delete to the inquiry processor 11 (S170).

And then, when a data insert or delete request is occurred from the inquiry processor 11, the index cache key is set in the index cache 23 without changing the original index in the same way as the above mentioned method, and sorts and manages data where the index cache key is set.

Further, when a request of the transaction commit is occurred from the inquiry processor 11 as shown in FIG. 8, the index manager 21 informs all registered indexes 22 of the transaction commit (S210).

And then, when the transaction commit is transferred from the index 22 to the index cache 23 (S220), the index cache 23 checks information set in a Del Flag of a cache key for all data stored on the index cache node (S230).

Further, the index cache 23 requests to insert/delete the index key to the index based on the result of the checked cache key insert/delete (S240). In this case, a key insert is requested when the information set in the Del Flag is an insert, and a key delete is requested when the information is a delete.

And then, the index 22 requests a data page to the buffer manager 31 to process the requested key insert/delete data (S250).

Thus, the buffer manager 31 transfers the data page which is stored on a buffer to the index 22 (S260), and the index 22 inserts or deletes an index key from or to the original index by reflecting the index cache key information transferred from the aforementioned index cache in the transferred index data page (S270).

In this case, the index 22 repeats inserting or deleting the key to or from the index by requesting the data page to the buffer manager until all data in a node of the index cache 23 is processed.

Further, when a process on all data is ended, the index 22 transfers the transaction result to the index manger 21 (S280), and the index manger 21 transfers the transferred transaction result to the inquiry processor 11 (S290).

And then, when the transaction is ended, the index cache 23 deletes the index cache key.

As such, the present invention performs a work of inserting data to the index cache having the same node information as the original index constructed on a memory and then sorting and managing the data, and reflecting data of the index cache constructed on the memory into the original index when the transaction commit is occurred.

In this case, the transaction manager and the log manager are used and changed once, and thus the data page written as a log is never changed again by a user request.

Further, a data process in which an operation of the index cache is brief and quick may be expected as an insert is only performed in the index cache by only adding information of inserting or deleting a calculation, which adds or deletes data to or from the index by a user request, to or from the cache key.

A degrade of performance in a disk I/O does not exist as all processing is occurred on a memory while a transaction is initiated and a user request is processed, and the disk I/O occurred in the transaction manager and the log manager is optimized and is considered as a minimized disk I/O when the index cache reflects the cache key in the original index before the transaction manager processes the transaction commit when the transaction is committed.

Further, a node information change as data is inserted or deleted is occurred when data stored on the index cache is reflected on the original index, in which a repeated calculation in change is not occurred either for a change of a neighbor node or a parent node as all data are sorted in the index cache and are sequentially processed.

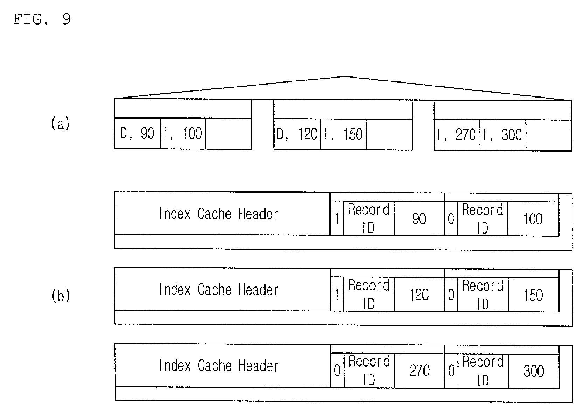

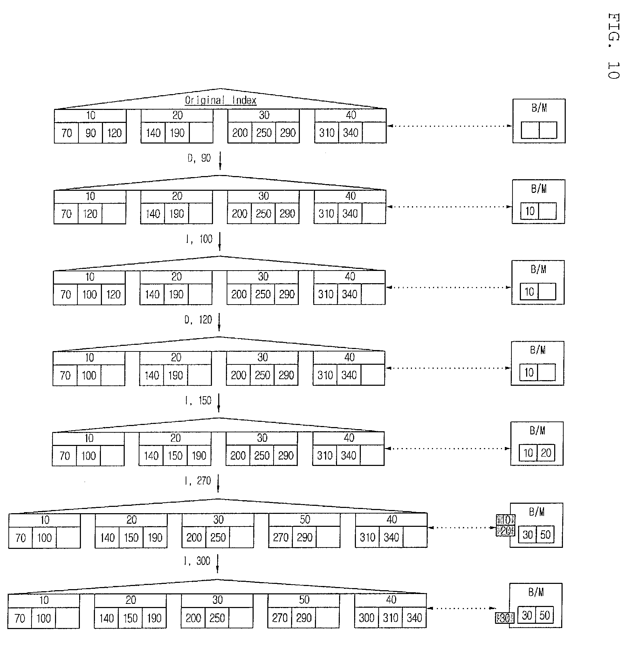

A process of processing a user inquiry request in accordance with the above mentioned present invention is explained with reference to FIGS. 9 and 10.

Herein, the user inquiry request is as follows.
"insert into table value(id=100)";
"insert into table value(id=300)";
"insert into table value(id=270)";
"delete from table where(id=90)";
"insert into table value(id=150)";
"delete from table where(id=120)";
FIG. 9 is a result of constructing the index cache, and a structure of the index cache node in accordance with an embodiment of the present invention, in which the index cache is constructed as shown in FIG. 9 (a) in response to the user inquiry request and the constructed index cache is configured as the index cache node as shown in FIG. 9 (b).

In this case, in "D, 90," "I, 150" shown in each page node of FIG. 9 (a), D represents a delete, I represents an insert, and the numbers 90 and 150 and so on correspond to an ID.

Such index cache is configured with the index cache header as shown in FIG. 9 (b), in which the number "1" represents the delete where the Delete flag is set, and the number "O" represents the insert where the Delete flag is not set.

Further, the embodiment of the present invention configures the structure of the index cache node by sorting the order of ID in response to the user inquiry request as shown in FIG. 9 (b).

FIG. 10 is an exemplary diagram for explaining the index insert/delete and buffer management method in response to the user inquiry request of the database management system in accordance with the embodiment of the present invention, in which it is explained under an assumption that the number of pages that the buffer manager manages is 2 for processing an index of an original DB.

The embodiment of the present invention changes the index cache as the order of ID constructed and sorted in the index cache and migrates the index cache to the original index when the transaction commit is requested from the inquiry processor.

Firstly, the buffer manager calls the page "10" from the buffer and deletes "90" based on the D, 90 index cache in response to the user inquiry request, and the buffer manager inserts "100" to "10" based on the I, 100 index cache.

And then, the buffer manager deletes "120" of the page "10" based on the D, 120 index cache, and the buffer manager calls the page "20" from the buffer based on the I, 150 index cache and inserts "150."

And then, the buffer manager should insert 270 in the page "30" based on the I, 270 index cache, however, the buffer manager writes a non-referred pages "10" and "20" in a file as an empty region does not exist in the page "30", and generates the page "50" by dividing the page "30" in the buffer. Further, 290 is migrated and 270 is inserted to the generated page "50."

And then, the buffer manager writes the page "30" in a file based on the I, 270 index cache, calls the page "40" from the buffer and inserts 300.

According to the above mentioned example, the change in page written in a file is performed five times. That is, the change in the pages "10" and "20" for inserting id=270 and the change in the pages "30," "40," and "50" for inserting id=300 are performed, and a duplicated change in the page ends up not being existed.

According to this invention, there are effects in that it does not allow the disk access so as to read and write the data block by means of the memory buffer during the transaction; if the transaction is committed, since the original index is changed, any disk I/O is not generated in the index before the transaction is committed; and when the transaction is committed, since the File I/O is generated due to the data sorted in the index cache, the number of the disk File I/O is reduced, so that the update operation can be quickly and efficiently conducted.

There is another effect in that, when the transaction commit is generated while sorting the index cache, since the data is sequentially reflected in the index, even though one-time changed index page is removed from the memory buffer, it does not call again in the same transaction, so that the duplicated File I/O on the same disk block can be decreased, thereby saving the cost of the File I/O.

There are further other effects in that, since it is no access to the disk block having the index page until the transaction is committed, the buffer manager has the free space of the memory buffer and since the free space of the memory buffer can be used in other record or the index operation, it can improve the overall performance of the system.

Although embodiments of the present invention were described above, the spirit of the present invention is not limited thereto, changes and modifications substantially equivalent to the embodiment of the present invention should be construed as being included in the scope of the present invention, and the prevent invention may be changed in various ways within the scope of the present invention by those skilled in the art.

## Claims

1. A data processing method, having an index cache structure specified to a transaction in a mobile DBMS environment, comprising the steps of:
recording only information on whether data is deleted/inserted on the an index cache without changing original index data while an inquiry process is progressed in response to a request to insert or delete data from an inquiry processor; and
performing a change on data by changing the original index based on whether data recorded on the index cache upon a transaction commit is deleted.

2. The data processing method of claim 1, further comprising:
generating and managing the index cache structure having an index cache key to sequentially manage the request to insert or delete data randomly inputted from the inquiry processor based on an index,
wherein the index cache structure is configured of an information field for classifying whether data is inserted or deleted, a record ID field, and a key field.

3. The data processing method of claim 1 or 2, wherein the information field for classifying whether the data is inserted or deleted is configured to be set as a del flag, and
wherein the request is capable of determining as a request to insert data when the del flag is a null.

4. The data processing method of claim 3, further comprising:
generating and managing an index cache node in response to a plurality of requests to insert/delete data inputted while the inquiry process is progressed,
wherein the index cache node is configured of a plurality of index caches sorted as a sequence of a node page header and the record ID.

5. A data processing method, having an index cache structure specified to a transaction in a mobile DBMS environment, comprising the steps of:
requesting an index key insert/delete to an index cache by means of an index manager and an index without changing original index data, when a request to insert or delete data from an inquiry processor is generated;
configuring an index cache key of requesting the data insert/delete by means of the index cache in response to the request for the index key insert/delete;
configuring the configured cache key to an index cache node;
classifying whether a request for a transaction commit is an insertion or a deletion of the index cache key and transferring the classification thereof to the index by means of the index cache, when the request for the transaction commit is generated from the inquiry processor;
asking a buffer manager for an index data page by means of the index so as to receive it; and
changing the received index data page in response to the request for the index key insert/delete received from the index and transferring a transaction result to the inquiry processor through the index manager.

6. The data processing method of claim 5, wherein the index cache key is configured of an information field for classifying whether data is inserted or deleted, a record ID field, and a key field so as to sequentially manage the request to insert or delete data randomly inputted from the inquiry processor by means of the index cache.

7. The data processing method of claim 5 or 6, wherein the information field for classifying whether the data is inserted or deleted is configured to be set as a del flag, and wherein the request is capable of determining as a request to insert data when the del flag is a null.

8. The data processing method of claim 7, wherein the index cache node is configured of a plurality of index caches sorted as a sequence of a node page header and the record ID.
